# EUROPÄISCHE PATENTSCHRIFT

(11) **EP 0 948 654 B1**
(45) Veröffentlichungstag und Bekanntmachung des Hinweises auf die Patenterteilung: **01.08.2001**
(21) Anmeldenummer: 97942698.8
(22) Anmeldetag: 06.10.1997
(51) Int. Cl.: C21B 13/14, C21B 13/00

(54) **VERFAHREN ZUR HERSTELLUNG VON FLÜSSIGEM ROHEISEN ODER STAHLVORPRODUKTEN SOWIE ANLAGE ZUR DURCHFÜHRUNG DES VERFAHRENS**
METHOD FOR PRODUCING LIQUID PIG IRON OR STEEL FABRICATED MATERIALS AND INSTALLATION FOR IMPLEMENTING SAID METHOD
PROCEDE DE PRODUCTION DE FONTE BRUTE LIQUIDE OU DE DEMI-PRODUITS DE L'ACIER, ET INSTALLATION POUR LA MISE EN OEUVRE DE CE PROCEDE

(30) Priorität: 08.10.1996 AT 177996
(43) Veröffentlichungstag der Anmeldung: 13.10.1999
(73) Patentinhaber: VOEST-ALPINE INDUSTRIEANLAGENBAU GESELLSCHAFT m.b.H., A-4031 Linz (AT)
(72) Erfinder: STOCKINGER, Josef, A-4060 Leonding (AT); NAGL, Michael, A-4204 Reichenau (AT)
(74) Vertreter: VA TECH Patente GmbH
(86) Internationale Anmeldenummer: AT9700214
(87) Internationale Veröffentlichungsnummer: WO9815661

(56) Entgegenhaltungen:
- EP-A- 0 576 414
- WO-A-90/07010
- WO-A-90/15162
- DE-B- 1 086 256
- GB-A- 827 957
- US-A- 4 490 170

## Beschreibung

Die Erfindung betrifft ein Verfahren zur Herstellung von flüssigem Roheisen oder Stahlvorprodukten aus feinteilchenförmigen Eisenoxidträgern und stückigem eisenhältigem Material, wie teil- und/oder fertigreduziertem Eisenschwamm, in einer Einschmelzvergasungszone eines Einschmelzvergasers, in dem unter Zuführung von kohlenstoffhältigem Material und sauerstoffhältigem Gas bei gleichzeitiger Bildung eines Reduktionsgases in einem aus festen Kohlenstoffträgern gebildeten Bett das eisenhältige Material eingeschmolzen wird, gegebenenfalls nach vorheriger Fertigreduktion, wobei feinteilchenförmige Eisenoxidträger, wie eisenhältiges Feinerz und Erzstaub und oxidischer Eisen-Feinstaub, in einen den Einschmelzvergaser verlassenden Reduktionsgasstrom eingebracht werden, das Reduktionsgas von dem daraus gebildeten feinteilchenförmigen Material befreit wird, das abgeschiedene feinteilchenförmige Material in die Einschmelzvergasungszone über eine - ein Schleusensystem bildende - Staubrückführlinie mittels eines Staubbrenners eingebracht wird und das Reduktionsgas zur Reduktion von eisenoxidhältigem Material herangezogen wird, sowie eine Anlage zur Durchführung des Verfahrens.

Ein Verfahren dieser Art ist aus der EP-A - 0 576 414 bekannt. Mit dem bekannten Verfahren ist es möglich, zusätzlich zu Stückerz Feinerz und/oder Erzstaub, wie in einem Hüttenwerk anfallenden oxidischen Eisenfeinstaub, in größeren Mengen einzusetzen. Die in den Reduktionsgasstrom eingebrachten oxidischen Feinteilchen werden über eine Staubrückführlinie in die Einschmelzvergasungszone des Einschmelzvergasers gefördert. Die Staubrückführlinie weist eine Staubschleuse und ein pneumatisches Fördersystem sowie einen Staubbrenner auf, wobei die Staubschleuse den Druckunterschied zwischen dem Einschmelzvergaser und dem Feststoffabscheider, beispielsweise einem Zyklon, der das Reduktionsgas von den Feinteilchen wiederum befreit, überwindet.

Ein Problem ergibt sich hierbei jedoch dadurch, daß in die Einschmelzvergasungszone eingebrachte oxidische Feinteilchen in der Einschmelzvergasungszone noch reduziert werden müssen. Um den Einschmelz- und Vergasungsprozeß in der Einschmelzvergasungszone, d.h. die Erzeugung des Reduktionsgases, nicht zu beeinträchtigen. kann daher mit dem bekannten Verfahren keine allzu große Menge solcher oxidischer Feinteilchen verarbeitet werden.

Die Erfindung bezweckt die Vermeidung dieser Nachteile und Schwierigkeiten und stellt sich die Aufgabe, das oben beschriebene Verfahren dahingehend weiterzuentwickeln, daß Feinerz und/oder Erzstaub, wie in einem Hüttenwerk anfallender oxidischer Eisenfeinstaub, in großen Mengen eingesetzt werden kann, wobei eine Störung des Einschmelzvergasungsprozesses vermieden wird. Dies soll zudem ohne großen apparativen Aufwand möglich sein.

Diese Aufgabe wird erfindungsgemäß dadurch gelöst, daß das abgeschiedene feinteilchenförmige Material in der ein Schleusensystem bildenden Staubrückführlinie mittels mindestens eines Wirbelschichtreaktors reduziert wird, wobei die Wirbelschicht vom abgeschiedenen feinteilchenförmigen Material und vom Reduktionsgas gebildet ist.

Hierdurch gelingt es, daß die in den Reduktionsgasstrom eingebrachten feinteilchenförmigen Eisenoxidträger, wie Feinerz, beim Transport über die Staubrückführlinie in einem hohen Grad vorreduziert werden, wobei die hierzu erforderlichen Anlagenteile sowohl konstruktiv als auch von der Kostenseite her einfach zu verwirklichen sind. Durch den hohen Grad der Vorreduktion der feinteilchenförmigen Eisenoxidträger gelingt es, sehr große Mengen solcher Eisenoxidträger zu verarbeiten, ohne daß es zu irgendeiner Beeinträchtigung des Einschmelz- und des Vergasungsprozesses kommt.

Eine Variante, bei der das der Staubrückführlinie zugeführte Reduktionsgas optimal genutzt wird, ist dadurch gekennzeichnet, daß die Wirbelschichtschleuse eine Gegenstrom-Wirbelschichtzone, gebildet von dem abgeschiedenen feinteilchenförmigen Material, die von Reduktionsgas im Gegenstrom zum Material durchströmt wird, und eine Gleichstrom-Wirbelschichtzone, gebildet von dem abgeschiedenen feinteilchenförmigen Material, die von Reduktionsgas im Gleichstrom zum Material durchsetzt wird, vorzugsweise in wesentlich größerer Menge als in der Gegenstrom-Wirbelschichtzone, aufweist, in denen das feinteilchenförmige Material reduziert wird.

Um ein Reduzieren der feinteilchenförmigen Eisenoxidträger bereits im Reduktionsgasstrom in einem bestimmten Ausmaß sicherzustellen, wird vorteilhaft das feinteilchenförmige Eisenerz in den Reduktionsgasstrom, knapp nachdem dieser den Einschmelzvergaser verlassen hat, eingebracht, wobei zweckmäßig das feinteilchenförmige Eisenerz in den Reduktionsgasstrom, vorzugsweise nach Abkühlung desselben auf 800 bis 900°C, eingeblasen wird.

Zur Sicherstellung eines optimalen Kontakts der einzelnen Feinteilchen mit dem Reduktionsgas, u.zw. unmittelbar nach Eintritt der Feinteilchen in den Reduktionsgasstrom, wird gemäß einer bevorzugten Ausführungsform ein zentraler, von dem feinteilchenförmigen Eisenerz und einem Trägergas gebildeter Materialstrahl in das Reduktionsgas eingeleitet und mindestens ein von einem Sekundärgas gebildeter Gasstrahl gegen den Materialstrahl gerichtet, wobei der Gasstrahl den Materialstrahl zerstäubt und die Feinteilchen im Reduktionsgas gleichmäßig verteilt werden

Vorzugsweise versetzt der Gasstrahl dein Materialstrahl ein Drehmoment um die Achse des Materialstrahles und treten die Feinteilchen durch Zentrifugalkräfte aus dem Materialstrahl aus und wird dieser aufgelöst.

Ein guter Kontakt der Feinteilchen mit dem Reduktionsgas kann auch dadurch sichergestellt werden, daß das feinteilchenförmige Eisenerz in dem Reduktionsgasstrom entgegengesetzt gerichtet zur Strömung desselben eingeblasen wird.

Eine Anlage zur Durchführung des Verfahrens mit einem Einschmelzvergaser mit einer Zuleitung für die Zugabe von kohlenstoffhaltigem Material, einer Reduktionsgasleitung mit einem Feststoffabscheider für den Abzug des erzeugten Reduktionsgases und einer Leitung für die Zuleitung von sauerstoffhältigem Gas, sowie weiters mit einem Schlacken- und Eisenschmelzenabstich, wobei ein unterer Abschnitt des Einschmelzvergasers zum Auffangen des geschmolzenen Roheisens bzw. Stahlvormaterials und der flüssigen Schlacke, ein darüber liegender mittlerer Abschnitt zur Aufnahme eines Bettes aus festen Kohlenstoffträgern und anschließend ein oberer Abschnitt als Beruhigungsraum vorgesehen sind und ein Reduktionsgefäß für eisenoxidhältiges Material, wobei das Reduktionsgefäß mit dem Einschmelzvergaser über die Reduktionsgasleitung und einer das mindestens teilreduzierte Material (Eisenschwamm) vom Reduktionsgefäß zum Einschmelzvergaser fördernden Leitung verbunden ist und wobei in die Reduktionsgasleitung eine Förderleitung für feinteilchenförmiges Eisenerz mündet, und mit einer vom Feststoffabscheider ausgehenden und in den Einschmelzvergaser mit einem Staubbrenner mündenden - ein Schleusensystem bildenden - Staubrückführeinrichtung, ist dadurch gekennzeichnet, daß die Staubrückführeinrichtung von mindestens einem Wirbelschichtreaktor gebildet ist, in den eine Reduktionsgas zuführende Leitung mündet.

Gemäß einer bevorzugten Ausführungsform ist die Staubrückführeinrichtung von einem Gegenstrom-Wirbelschichtreaktor und einem nachgeordneten Gleichstrom-Wirbelschichtreaktor gebildet, wobei sowohl in den Gegen- als auch in den Gleichstrom-Wirbelschichtreaktor eine Reduktionsgas zuführende Leitung mündet.

Vorzugsweise mündet die Förderleitung für feinteilchenförmiges Eisenerz im Anfangsbereich der Reduktionsgasleitung, d.h. knapp nach deren Anschluß an den Einschmelzvergaser, in diese ein.

Eine bevorzugte Ausführungsform ist dadurch gekennzeichnet, daß die Förderleitung für feinteilchenförmiges Eisenerz von einer durch die Wand der Reduktionsgasleitung ragenden Einblasdüse gebildet ist, welche ein Feinteilchen und ein Trägergas leitendes Zentralrohr aufweist und an der Mündung des Zentralrohres mit mindestens einer Düse versehen ist, die an eine Gasleitung zur Zuführung eines Sekundärgases angeschlossen ist, wobei die Längsachse der Düse mit der Längsmittelachse des Zentralrohres einen Winkel einschließt, wobei vorteilhaft der Winkel im Bereich zwischen 20 und 60° liegt.

Vorzugsweise ist die Längsachse der Düse zur Längsmittelachse des Zentralrohres windschief ausgerichtet, wobei bei Projektion der Längsachse der Düse senkrecht auf eine Ebene, gelegt durch die Längsmittelachse des Zentralrohres und die Düsenmündung, zwischen der projizierten Längsachse der Düse und der Längsmittelachse des Zentralrohres ein Winkel im Bereich zwischen 30 und 60° gebildet ist.

Eine weitere bevorzugte Ausführungsform ist dadurch gekennzeichnet, daß die Förderleitung für feinteilchenförmiges Eisenerz in die Reduktionsgasleitung mit einer der Strömung in der Reduktionsgasleitung entgegengesetzt gerichteten Lanze mündet.

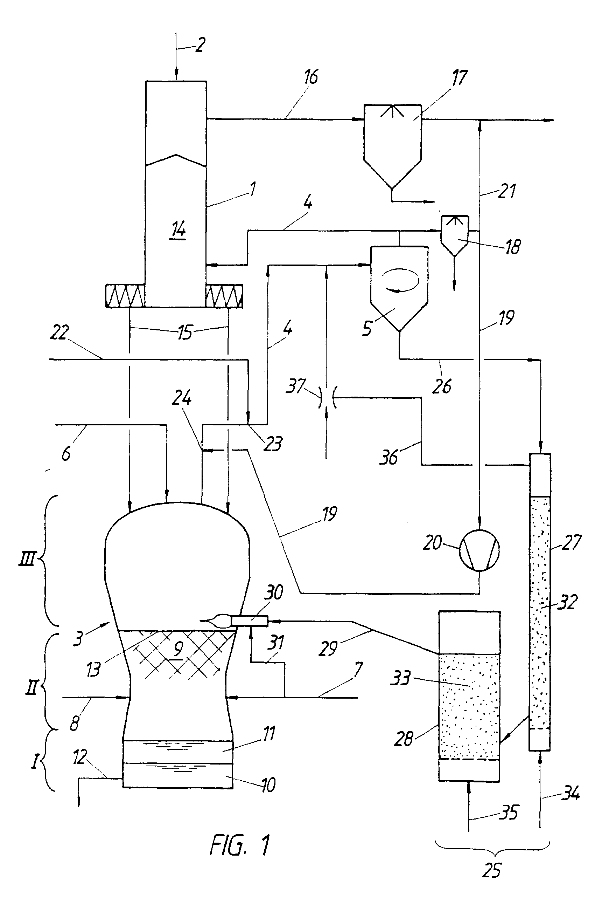

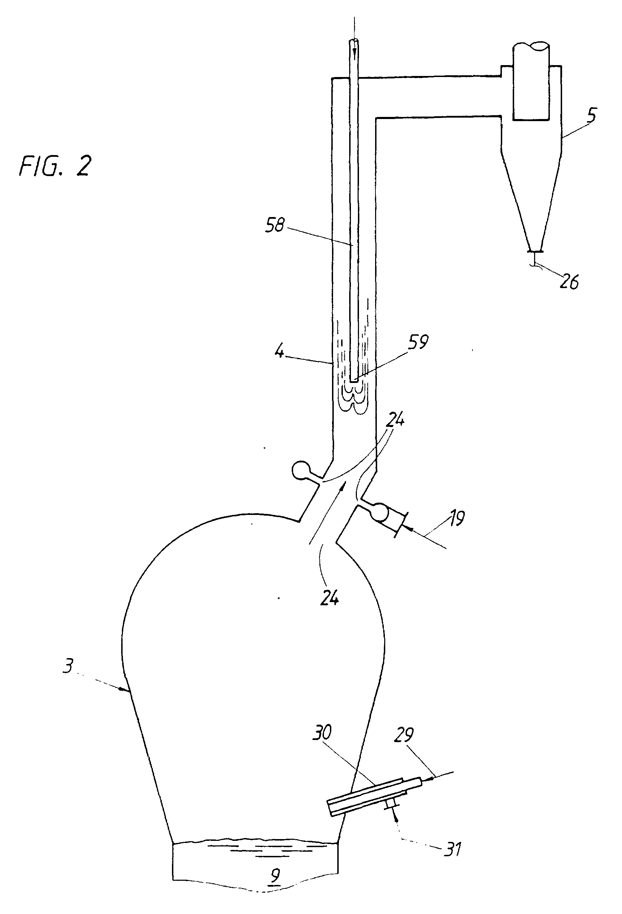

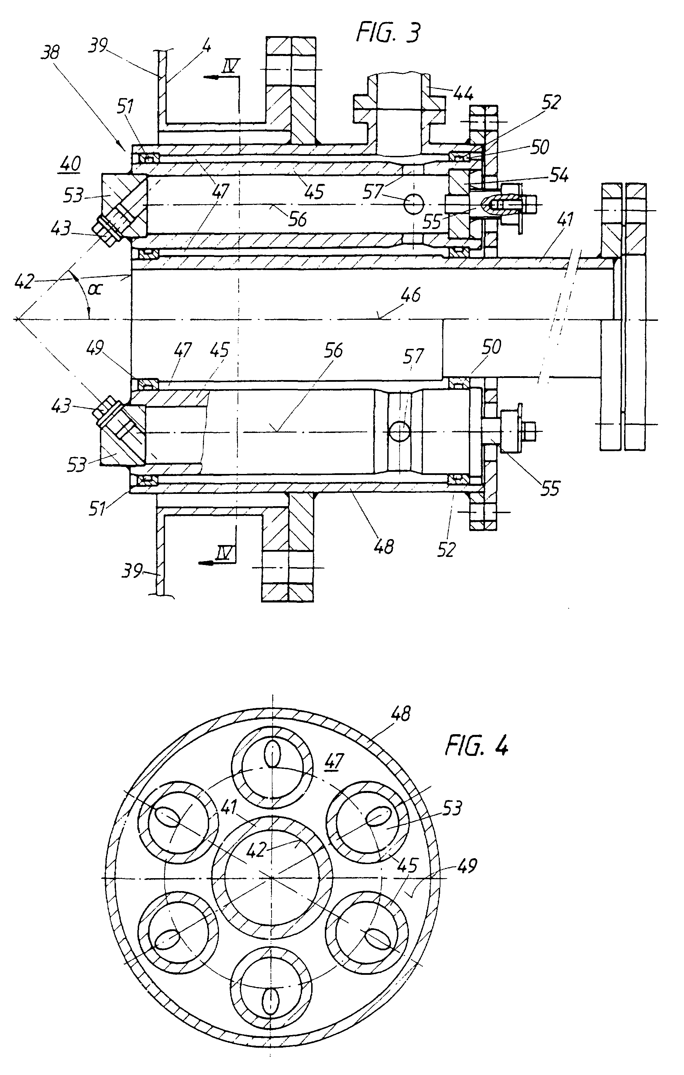

Die Erfindung ist nachfolgend anhand der Zeichnung näher erläutert, wobei Fig. 1 in schematischer Darstellung eine Anlage zur Durchführung des erfindungsgemäßen Verfahrens nach einer ersten Ausführungsform und Fig. 2 ein Detail der Anlage nach einer geänderten Ausführungsform veranschaulichen. Die Fig. 3 und 4 zeigen eine Einrichtung zum Einbringen der feinteilchenförmigen Eisenoxidträger, u.zw. Fig. 3 im Längsschnitt und Fig. 4 im Querschnitt gemäß der Linie IV-IV der Fig. 3.

In einen einen Reduktionsreaktor 1 bildenden Schachtofen wird von oben über eine Fördereinrichtung 2 stückiges Eisenerz und/oder Eisenerz in Pelletform über ein nicht dargestelltes Schleusensystem, gegebenenfalls zusammen mit Zuschlagstoffen unter Bildung eines bewegten Bettes, chargiert.

Unter bewegtem Bett wird ein sich kontinuierlich bewegender Materialstrom verstanden, dessen sich bewegende Teilchen mit einem strömenden Reduktionsgas in Kontakt gelangen. Vorzugsweise kommt ein sich kontinuierlich infolge Schwerkraftwirkung nach unten bewegender Materialstrom zur Anwendung.

Als Reduktionsreaktor kann anstelle eines Schachtofens 1 auch ein Reaktor mit einer Venturi-Wirbelschicht, einer zirkulierenden Wirbelschicht, einem Fließbett oder ein Reaktor mit Wanderrost bzw. ein Drehrohrofen vorgesehen sein.

Der Schachtofen 1 steht mit einem Einschmelzvergaser 3 in Verbindung, in dem aus Kohle und sauerstoffhältigem Gas ein Reduktionsgas erzeugt wird, welches über eine Reduktionsgasleitung 4 dem Schachtofen 1 zugeführt wird, wobei in der Reduktionsgasleitung 4 eine Casreinigungseinrichtung 5, wie ein Heißgaszyklon, für eine Trocken-Entstaubung vorgesehen ist.

Der Einschmelzvergaser 3 weist eine Zuleitung 6 für feste Kohlenstoffträger, eine Zuleitung 7 für sauerstoffhältige Gase sowie gegebenenfalls Zuleitungen 8 für bei Raumtemperatur flüssige oder gasförmige Kohlenstoffträger, wie Kohlenwasserstoffe, sowie für gebrannte Zuschläge auf.

In dem Einschmelzvergaser 3 sammelt sich in einem unteren Abschnitt 1 unterhalb der Einschmelzvergasungszone 9 schmelzflüssiges Roheisen 10 bzw. schmelzflüssiges Stahlvormaterial und schmelzflüssige Schlacke 11, die über einen Abstich 12 abgestochen werden.

In einem über dem unteren Abschnitt 1 angeordneten Abschnitt II des Einschmelzvergasers 5 kommt es zur Ausbildung eines Bettes 13, vorzugsweise eines Festbettes und/oder eines Wirbelbettes, aus den festen Kohlenstoffträgern. Der oberhalb des mittleren Abschnittes II vorgesehene obere Abschnitt III fungiert als Beruhigungsraum für das sich im Einschmelzvergaser 3 bildende Reduktionsgas und mit dem vom Reduktionsgas gebildeten Gasstrom mitgerissene Feststoffteilchen.

Das im Schachtofen 1 in einer Direktreduktionszone 14 zu Eisenschwamm reduzierte Eisenerz wird zusammen mit den in der Direktreduktionszone 14 gebrannten Zuschlägen über eine den Schachtofen 1 mit dem Einschmelzvergaser 3 verbindende Förderleitung 15 zugeführt, beispielsweise mittels Austragsschnecken etc. An dem oberen Teil des Schachtofens 1 schließt eine Exportgas-Ableitung 16 für das in der Direktreduktionszone 14 aus Reduktionsgas entstehende Exportgas an.

Das über die Exportgas-Ableitung 16 abgezogene Exportgas wird zunächst einer Reinigung in einem Wäscher 17 unterzogen, um es möglichst vollständig von Staubpartikeln zu befreien und den Wasserdampfgehalt zu erniedrigen, so daß es dann einer weiteren Verwendung zur Verfügung stehen kann.

Ein Teil des im Einschmelzvergaser 3 gebildeten Reduktionsgases wird über einen der Gasreinigungseinrichtung 5 nachgeordneten Wäscher 18 und über eine Leitung 19 mit Gasverdichter 20 im Kreislauf wieder in die Zuleitung 4 eingespeist, um das in sehr heißem Zustand aus dem Einschmelzvergaser 3 austretende Reduktionsgas vor Eintritt in die Gasreinigungseinrichtung 5 zu konditionieren, insbesondere auf einen für den Direktreduktionsprozeß im Schachtofen 1 günstigen Temperaturbereich zu kühlen. Über eine Ausgleichsleitung 21 kann gegebenenfalls Überschuß-Reduktionsgas dem aus dem Schachtofen 1 austretenden Exportgas zwecks Konstanthaltung des Systemdruckes zugemischt werden.

Feinteilchenförmige Eisenoxidträger, wie eisenhältiges Feinerz und Erzstaub und oxidischer Eisenfeinstaub, werden über eine Förderleitung 22, die in die Reduktionsgasleitung 4 einmündet, in den Reduktionsgasstrom eingebracht. Die Einmündung 23 der Förderleitung 22 in die Reduktionsgasleitung 4 erfolgt - gesehen in Strörnungsrichtung des Reduktionsgases - nach der Einmündung 24 der ein gekühltes Reduktionsgas einspeisenden Leitung 19, wodurch eine durch Hitze verursachte Agglomeration der Feinteilchen vermieden wird.

Auf dem Weg der Feinteilchen von der Einmündung 23 der Förderleitung 22 bis zur Gasreinigungseinrichtung 5 erfolgt bereits eine erste Vorreduktion der oxidischen Feinteilchen. In der Gasreinigungseinrichtung 5 werden die Feinteilcher. abgeschieden und über eine Staubrückführeinrichtung, die generell mit 25 bezeichnet ist, in den Einschmelzvergaser 3 eingebracht.

Die Staubrückführeinrichtung 25 ist ausgehend von der Gasreinigungseinrichtung 5 von einer Förderleitung 26, einem Gegenstrom-Wirbelschichtreaktor 27, in den die Förderleitung 26 einmündet, und einem in Förderrichtung der Feinteilchen nachgeordneten Gleichstrom-Wirbelschichtreaktor 28 gebildet. Von diesem Gleichstrom-Wirbelschichtreaktor geht eine Förderleitung 29 für die Feinteilchen aus, die zu einem in Höhe der Einschmelzvergasungszone 9 bzw. darüber angeordneten Staubbrenner 30 führt. In diesen Staubbrenner 30 mündet zusätzlich eine Sauerstoffleitung 31.

Sowohl der Gegenstrom-Wirbelschichtreaktor 27 als auch der nachgeordnete Gleichstrom-Wirbelschichtreaktor 28 werden von Reduktionsgas beaufschlagt, wodurch es zur Ausbildung und Aufrechterhaltung der Gegen- bzw. Gleichstromwirbelschichten 32, 33 kommt. Das Reduktionsgas wird über von der Reduktionsgasleitung 4 ausgehende Zweigleitungen 34, 35 eingespeist.

Zur möglichst weitgehenden Vermeidung eines von dem Gegenstrom-Wirbelschichtreaktor 27 in Richtung zur Gasreinigungseinrichtung 5 fließenden Gasstromes - der den Wirkungsgrad der Gasreinigungseinrichtung 5 verschlechtern würde - ist eine Gasrückführleitung 36 vorgesehen, die vom Gegenstrom-Wirbelschichtreaktor 27 ausgeht und über einen Injektor 37 in die Reduktionsgasleitung 4 einmündet.

Die Einmündung der Förderleitung 22 für die eisenoxidhältigen Feinteilchen in die Reduktionsgasleitung 4 erfolgt vorzugsweise über eine Einrichtung zum Einblasen dieser Feinteilchen. Diese Einrichtung weist eine Einblasdüse 38 auf, die durch die Wand 39 der Reduktionsgasleitung 4 in deren Innenraum 40 ragt.

Die Einblasdüse 38 weist ein Zentralrohr 41 auf, an das die Förderleitung 22 angeschlossen ist und durch das die Feinteilchen mit Hilfe eines Trägergases zu dessen Mündung 42 geblasen werden, so daß sich an der Mündung 42 ein von den Feinteilchen gebildeter Materialstrahl ausbildet.

An der Mündung 42 des Zentralrohres 41 sind das Zentralrohr 41 peripher umgebend mehrere Düsen 43 vorgesehen, die an eine Gasleitung 44 zur Zuführung eines Sekundärgases angeschlossen sind, u.zw. jeweils über Gasleitrohre 45. Diese Gasleitrohre 45 sind als parallel zur Längsmittelachse 46 des Zentralrohres 41 angeordnete Rohre ausgebildet, die in einem das Zentralrohr 41 peripher umgebenden Ringraum 47, in den die Gasleitung 44 einmündet, vorgesehen sind. Dieser Ringraum 47 ist außenseitig von einem Mantel 48 begrenzt, der stirnseitig an der Mündung 42 und an der gegenüberliegenden Stirnseite mittels Stirnflanschen 49, 50 geschlossen ist. Die Gasleitrohre 45 sind mittels gasdichter Lager 51, 52 gegenüber den Stirnflanschen 49, 50 drehbar.

Die einander gegenüberliegenden Enden der Gasleitrohre 45 sind mit Flanschen 53, 54 geschlossen. An den äußeren Flanschen 54 sind jeweils Drehzapfen 55, die durch den außenseitigen Stirnflansch 50, der den Ringraum 47 außenseitig begrenzt, nach außen ragend angeordnet. An den Drehzapfen 55 sind nicht näher dargestellte Antriebe zum Drehen der Gasleitrohre 45 um deren Längsachsen 56 vorgesehen. An den innenseitigen Flanschen 53 der Gasleitrohre 45 sind die Düsen 43 angeordnet, die mit der Längsmittelachse 46 des Zentralrohres einen Winkel α einschließen.

Die Gasversorgung der Gasleitrohre 45 und schließlich der Düsen 43 erfolgt über den Ringraum 47 und Öffnungen 57 der Gasleitrohre 45.

Durch Drehen der Gasleitrohre 45 um ihre Längsachsen 56 lassen sich die aus den Düsen 43 strömenden Gasstrahlen in ihrer Lage zum Materialstrahl variieren, u.zw. dahingehend, daß die Gasstrahlen von einer die Längsmittelachse 46 des Zentralrohres 41 schneidenden Position in eine zu dieser Längsmittelachse 46 windschiefe Position bringbar sind. Mit Hilfe einer Einrichtung zum Drehen der Gasleitrohre 45 um deren Längsachsen 56 gelingt es, die Lage der Gasstrahlen zum Materialstrahl periodisch zu ändern. Der Winkel α, den die Gasstrahlen mit der Längsmittelachse 46 des Zentralrohres 41 einschließen, liegt vorzugsweise in einem Bereich zwischen 20 und 60°, wobei der Winkel α nicht für alle Gasstrahlen gleich groß sein muß.

Gemäß der in den Fig. 3 und 4 dargestellten Ausführungsform sind mehrere Düsen 43 um den gesamten Umfang der Mündung 42 des Zentralrohres 41 gleichmäßig verteilt angeordnet. Unter Umständen kann es jedoch genügen, wenn mehrere Düsen 43 an nur einer Umfangshälfte der Mündung 42 des Zentralrohres 41 vorgesehen sind.

Die Gasstrahlen werden vorzugsweise von einem Inertgas gebildet. Als Trägergas kann ebenfalls Inertgas dienen. Anstelle der Düsen 43 könnte auch ein Ringspalt im Stirnflansch 49 vorgesehen sein, durch den ein fächerförmiger Gasstrahl gegen den Materialstrahl gerichtet wird. Falls die Lage dere Gasstrahlen zum Materialstrahl nicht verändert werden muß, kann auf die Gasleitrohre 45 verzichtet werden; die Düsen 43 können dann starr im Stirnflansch 49 eingesetzt sein.

Das in das Reduktionsgas eingeblasene und mit Hilfe des Sekundärgases bereits sofort nach dem Eintreten in die Reduktionsgasleitung 4 im Reduktionsgas feinverteilte Eisenerz wird innerhalb dieser Leitung 4 reduziert, zumindest teilreduziert.

Zusätzlich zum Eisenerz können über die erfindungsgemäße Einrichtung auch feinkörnige Hüttenwerksabfallstoffe oder Kreislaufstoffe in oxidierter und/oder metallischer Form sowie eventuell zusätzlich kohlenstoffhältige Stoffe eingebracht werden.

Gemäß Fig. 2 erfolgt die Einbringung der oxidhältigen Feinteilchen mittels einer in das Innere der Reduktionsgasleitung 4 einmündenden Lanze 58, in der das von Feinteilchen gebildete Erz mittels eines Trägergases gefördert wird. Am Ende 59 der Lanze tritt das Erz entgegengesetzt zum Reduktionsgasstrom aus und wird in diesem durch Wirbelbildung sofort fein verteilt, so daß auch bei dieser Ausführungsform eine nach Eintritt sofort einsetzende Vorreduktion innerhalb der Reduktionsgasleitung 4 sichergestellt ist.

Die Erfindung ist nachfolgend anhand eines Ausführungsbeispieles für eine Anlage zur Herstellung von Roheisen mit einer Kapazität von 40 t/h näher erläutert. Diese Anlage weist zwei Staubrückführungseinrichtungen 25 der erfindungsgemäßen Art auf. Die angegebenen Zahlenwerte gelten jeweils für eine der beiden Staubrückführungseinrichtungen 25. Sämtliche Werte in den Tabellen sind gerundet, wodurch sich geringfügige Abweichungen von 100 % ergeben können.

Mit jeder der beiden Staubrückführungseinrichtungen 25 werden 4,5 t/h Feinerz eingeblasen. Das Feinerz weist nachstehende Analyse auf (in Gew.%).

**Tabelle I**

| | |
|---|---|
| Fe₂O₃ (Fe) | 94,3 % (66 %) |
| SiO₂ | 4,2 % |
| Al₂O₃ | 0,3 % |
| Cu | 0,02 % |
| Mn | 0,02 % |
| Zn | 0,002 % |
| TiO | 0,2 % |
| CaO | 0,07 % |
| S | 0,002 % |
| P | 0,02 % |
| Feuchte | 0,5 % |

Die Korngrößenverteilung ist wie folgt:

**Tabelle II**

| | |
|---|---|
| 98 % | - 1 mm |
| 80 % | - 0,5 mm |
| 25 % | -0,125mm |

Aus dem Einschmelzvergaser 3 tritt eine Reduktionsgasmenge von 38.320 Nm³/h aus. Die rückgeführte Kühlgasmenge beträgt 3.360 Nm³/h, wodurch sich eine Gesamtreduktionsgasmenge, die in die Gasreinigungseinrichtung 5 eintritt, von 41.680 Nm³/h ergibt. Die Analyse des Reduktionsgases vor der Einmündung 23 der Förderleitung 22 in die Reduktionsgasleitung 4 ist in nachstehender Tabelle III (in Vol.%) wiedergegeben.

**Tabelle III**

| | |
|---|---|
| CO | 65,3 % |
| CO₂ | 2,5 % |
| H₂ | 27,0 % |
| H₂O | 1,5 % |
| CH₄ | 1,0 % |
| N₂, Ar | 2,7 % |

Die Temperatur des Reduktionsgases beträgt an der Einmündung 23 der Förderleitung 22 900°C. Das aus dem Einschmelzvergaser 3 austretende Reduktionsgas ist mit Staub beladen. Der Staubgehalt beträgt 130 g/Nm³, der Staub weist folgende Analyse (Gew.%) auf.

**Tabelle IV**

| | |
|---|---|
| Fe | 20 % |
| C | 50 % |
| Al₂O₃, SiO₂ | Rest |

Für den Betrieb der die Wirbelschichtschleuse 25 bildenden Gegen- und Gleichstrom-Wirbelschichtreaktoren 27, 28 wird eine Reduktionsgasmenge von 2.800 Nm³/h benötigt, wobei 50 bis 20 Nm³/h in den Gegenstrom-Wirbelschichtreaktor 27 zugegeben werden. Die Analyse des hier zugegebenen Reduktionsgases ist in nachstehender Tabelle V (Vol.%) wiedergegeben.

**Tabelle V**

| | |
|---|---|
| CO | 63,4 % |
| CO₂ | 2,9 % |
| H₂ | 26,6 % |
| H₂O | 3,0 % |
| CH₄ | 1,0 % |
| N₂, Ar | 3,1 % |

Das Reduktionsgas weist eine Temperatur von 750°C bis 800°C auf.

Mit dem erfindungsgemäßen Verfahren gelingt es, einen Vorreduktionsgrad von 30 % im zugegebenen Feinerz innerhalb der Reduktionsgasleitung 4 sicherzustellen. Nach Austritt aus dem Gleichstrom-Wirbelschichtreaktor 28 weist das Eisenerz bereits einen Reduktionsgrad von 65 % auf.

## Patentansprüche

1. Verfahren zur Herstellung von flüssigem Roheisen (10) oder Stahlvorprodukten aus feinteilchenförmigen Eisenoxidträgern und stückigem eisenhältigem Material, wie teil- und/oder fertigreduziertem Eisenschwamm, in einer Einschmelzvergasungszone (9) eines Einschmelzvergasers (3), in dem unter Zuführung von kohlenstoffhältigem Material und sauerstoffhältigem Gas bei gleichzeitiger Bildung eines Reduktionsgases in einem aus festen Kohlenstoffträgern gebildeten Bett (13) das eisenhältige Material eingeschmolzen wird, gegebenenfalls nach vorheriger Fertigreduktion, wobei feinteilchenförmige Eisenoxidträger, wie eisenhältiges Feinerz und Erzstaub und oxidischer Eisen-Feinstaub, in einen den Einschmelzvergaser (3) verlassenden Reduktionsgasstrom eingebracht werden, das Reduktionsgas von dem daraus gebildeten feinteilchenförmigen Material befreit wird, das abgeschiedene feinteilchenförmige Material in die Einschmelzvergasungszone (9) über eine ein Schleusensystem bildende Staubrückführlinie (26, 27, 28, 29) mittels eines Staubbrenners (30) eingebracht wird und das Reduktionsgas zur Reduktion von eisenoxidhältigem Material herangezogen wird, dadurch gekennzeichnet, daß das abgeschiedene feinteilchenförmige Material in der Staubrückführlinie (26 bis 29) mittels mindestens eines Wirbelschichtreaktors (27, 28) reduziert wird, wobei die Wirbelschicht vom abgeschiedenen feinteilchenförmigen Material und vom Reduktionsgas gebildet ist.

2. Verfahren nach Anspruch 1, dadurch gekennzeichnet, daß die Wirbelschichtschleuse (25) eine Gegenstrom-Wirbelschichtzone (32), gebildet von dem abgeschiedenen feinteilchenförmigen Material, die von Reduktionsgas im Gegenstrom zum Material durchströmt wird, und eine Gleichstrom-Wirbelschichtzone (33), gebildet von dem abgeschiedenen feinteilchenförmigen Material, die von Reduktionsgas im Gleichstrom zum Material durchsetzt wird, vorzugsweise in wesentlich größerer Menge als in der Gegenstrom-Wirbelschichtzone (32), aufweist, in denen das feinteilchenförmige Material reduziert wird.

3. Verfahren nach Anspruch 1 oder 2, dadurch gekennzeichnet, daß das feinteilchenförmige Eisenerz in den Reduktionsgasstrom, knapp nachdem dieser den Einschmelzvergaser (3) verlassen hat, eingebracht wird.

4. Verfahren nach einem oder mehreren der Ansprüche 1 bis 3, dadurch gekennzeichnet, daß das feinteilchenförmige Eisenerz in den Reduktionsgasstrom, vorzugsweise nach Abkühlung desselben auf 800 bis 900°C, eingeblasen wird.

5. Verfahren nach Anspruch 4, dadurch gekennzeichnet, daß ein zentraler, von dem feinteilchenförmigen Eisenerz und einem Trägergas gebildeter Materialstrahl in das Reduktionsgas eingeleitet wird und mindestens ein von einem Sekundärgas gebildeter Gasstrahl gegen den Materialstrahl gerichtet wird, wobei der Gasstrahl den Materialstrahl zerstäubt und die Feinteilchen im Reduktionsgas gleichmäßig verteilt werden (Fig. 3, 4).

6. Verfahren nach Anspruch 5, dadurch gekennzeichnet, daß der Gasstrahl dem Materialstrahl ein Drehmoment um die Achse des Materialstrahles versetzt und die Feinteilchen durch Zentrifugalkräfte aus dem Materialstrahl austreten und dieser aufgelöst wird.

7. Verfahren nach Anspruch 4, dadurch gekennzeichnet, daß das feinteilchenförmige Eisenerz in den Reduktionsgasstrom entgegengesetzt gerichtet zur Strömung desselben eingeblasen wird (Fig. 2).

8. Anlage zur Durchführung des Verfahrens nach einem oder mehreren der Ansprüche 1 bis 7, mit einem Einschmelzvergaser (3) mit einer Zuleitung (6) für die Zugabe von kohlenstoffhältigem Material, einer Reduktionsgasleitung (4) mit einem Feststoffabscheider (5) für den Abzug des erzeugten Reduktionsgases und einer Leitung (7) für die Zuleitung von sauerstoffhältigem Gas, sowie weiters mit einem Schlacken- und Eisenschmelzenabstich (12), wobei ein unterer Abschnitt (I) des Einschmelzvergasers (3) zum Auffangen des geschmolzenen Roheisens (10) bzw. Stahlvormaterials und der flüssigen Schlacke (11), ein darüber liegender mittlerer Abschnitt (II) zur Aufnahme eines Bettes (13) aus festen Kohlenstoffträgern und anschließend ein oberer Abschnitt (III) als Beruhigungsraum vorgesehen sind, und ein Reduktionsgefäß (1) für eisenoxidhältiges Material, wobei das Reduktionsgefäß (1) mit dem Einschmelzvergaser (3) über die Reduktionsgasleitung (4) und einer das mindestens teilreduzierte Material (Eisenschwamm) vom Reduktionsgefäß (1) zum Einschmelzvergaser (3) fördernden Leitung (15) verbunden ist und wobei in die Reduktionsgasleitung (4) eine Förderleitung (22) für feinteilchenförmiges Eisenerz mündet, und mit einer vom Feststoffabscheider (5) ausgehenden und in den Einschmelzvergaser (3) mit einem Staubbrenner (30) mündenden ein Schleusensystem bildenden Staubrückführeinrichtung (25), dadurch gekennzeichnet, daß die Staubrückführeinrichtung (25) von mindestens einem Wirbelschichtreaktor (27, 28) gebildet ist, in den eine Reduktionsgas zuführende Leitung (34, 35) mündet.

9. Anlage nach Anspruch 8, dadurch gekennzeichnet, daß die Staubrückführeinrichtung (25) von einem Gegenstrom-Wirbelschichtreaktor (27) und einem nachgeordneten Gleichstrom-Wirbelschichtreaktor (28) gebildet ist, wobei sowohl in den Gegen- als auch in den Gleichstrom-Wirbelschichtreaktor eine Reduktionsgas zuführende Leitung (34, 35) mündet.

10. Anlage nach Anspruch 8 oder 9, dadurch gekennzeichnet, daß die Förderleitung (22) für feinteilchenförmiges Eisenerz im Anfangsbereich der Reduktionsgasleitung (4), d.h. knapp nach deren Anschluß an den Einschmelzvergaser (3), in diese einmündet.

11. Anlage nach einem oder mehreren der Ansprüche 8 bis 10, dadurch gekennzeichnet, daß die Förderleitung (22) für feinteilchenförmiges Eisenerz von einer durch die Wand (39) der Reduktionsgasleitung (4) ragenden Einblasdüse (38) gebildet ist, welche ein Feinteilchen und ein Trägergas leitendes Zentralrohr (41) aufweist und an der Mündung (42) des Zentralrohres (41) mit mindestens einer Düse (43) versehen ist, die an eine Gasleitung (44) zur Zuführung eines Sekundärgases angeschlossen ist, wobei die Längsachse der Düse (43) mit der Längsmittelachse (46) des Zentralrohres (41) einen Winkel (α) einschließt (Fig. 3, 4).

12. Anlage nach Anspruch 11, dadurch gekennzeichnet, daß der Winkel (α) im Bereich zwischen 20 und 60° liegt.

13. Anlage nach Anspruch 11 oder 12, dadurch gekennzeichnet, daß die Längsachse der Düse (43) zur Längsmittelachse (46) des Zentralrohres (41) windschief ausgerichtet ist, wobei bei Projektion der Längsachse der Düse (43) senkrecht auf eine Ebene, gelegt durch die Längsmittelachse (46) des Zentralrohres (41) und die Düsenmündung, zwischen der projizierten Längsachse der Düse und der Längsmittelachse (46) des Zentralrohres (41) ein Winkel (α) im Bereich zwischen 30 und 60° gebildet ist.

14. Anlage nach Anspruch 8 oder 9, dadurch gekennzeichnet, daß die Förderleitung (22) für feinteilchenförmiges Eisenerz in die Reduktionsgasleitung (4) mit einer der Strömung in der Reduktionsgasleitung entgegengesetzt gerichteten Lanze (58) mündet (Fig. 2).

## Claims

1. Process for producing liquid pig iron (10) or primary steel products from fine-particulate iron oxide carriers and lumpy iron-containing material, such as partially and/or completely reduced sponge iron, in a meltdown gasifying zone (9) of a melter gasifier (3), in which the iron containing material, optionally after previous complete reduction, is melted in a bed (13) formed of solid carbon carriers, with the supply of carbon-containing material and oxygen-containing gas while simultaneously forming a reducing gas, wherein fine-particulate iron oxide carriers, such as iron-containing fine ore and ore dust and oxidic iron fine dust, are introduced into a reducing gas stream leaving the melter gasifier (3), the reducing gas is freed from the fine-particulate material formed therefrom, the separated fine-particulate material is introduced into the meltdown gasifying zone (9) by means of a dust burner (30) via a dust recirculation line (26, 27, 28, 29) forming a sluice system and the reducing gas is used for reducing iron-oxide-containing material, characterized in that the separated fine-particulate material in the dust recirculation line (26 to 29) is reduced by means of at least one fluidized bed reactor (27, 28), the fluidized bed being formed by the separated fine-particulate material and by the reducing gas.

2. Process according to Claim 1, characterized in that the fluidized bed sluice (25) comprises a counterflow fluidized bed zone (32) formed by the separated fine-particulate material and penetrated by reducing gas in counterflow relative to said material, and a parallel-flow fluidized bed zone (33) formed by the separated fine-particulate material and penetrated by reducing gas in parallel flow with said material, preferably in a substantially larger amount than in the counterflow fluidized bed zone (32), in which zones the fine-particulate material is reduced.

3. Process according to Claim 1 or 2, characterized in that the fine-particulate iron ore is introduced into the reducing gas stream shortly after the latter has left the melter gasifier (3).

4. Process according to one or more of Claims 1 to 3, characterized in that the fine-particulate iron ore is blown into the reducing gas stream, preferably after the latter has been cooled to 800 to 900°C.

5. Process according to Claim 4, characterized in that a central material jet, formed by the fine-particulate iron ore and a carrier gas, is introduced into the reducing gas and at least one gas jet formed by a secondary gas is directed against the material jet, the gas jet atomizing the material jet and the fine particles being uniformly distributed within the reducing gas (Figs. 3, 4).

6. Process according to Claim 5, characterized in that the gas jet imparts to the material jet a torque about the axis of the material jet and the fine particles leave the material jet due to centrifugal forces, thereby breaking up the same.

7. Process according to Claim 4, characterized in that the fine-particulate iron ore is blown into the reducing gas stream in a direction opposite to the flow of the latter (Fig. 2).

8. Plant for carrying out the process according to one or more of Claims 1 to 7, comprising a melter gasifier (3) with a supply duct (6) for supplying carbon-containing material, a reducing gas duct (4) including a solids separator (5) for drawing off the reducing gas generated and a duct (7) for feeding oxygen-containing gas and also a slag and iron melt tap (12), wherein a lower section (I) of the melter gasifier (3) for collecting the molten pig iron (10) or primary steel material and the liquid slag (11), a central section (II) located thereabove for accommodating a bed (13) of solid carbon carriers and, following thereupon, an upper section (III) as a killing space are provided, and a reduction vessel (1) for iron-oxide-containing material, wherein the reduction vessel (1) is connected to the melter gasifier (3) via the reducing gas duct (4) and a duct (15) conveying the at least partially reduced material (sponge iron) from the reduction vessel (1) to the melter gasifier (3) and wherein a conveying duct (22) for fine-particulate iron ore runs into the reducing gas duct (4), and comprising a dust recirculation means (25) forming a sluice system, departing from the solids separator (5) and opening into the melter gasifier (3) by means of a dust burner (30), characterized in that the dust recirculation means (25) is formed by at least one fluidized bed reactor (27, 28) into which a duct (34, 35) feeding reducing gas runs.

9. Plant according to Claim 8, characterized in that the dust recirculation means (25) is formed by a counterflow fluidized bed reactor (27) and a downstream parallel-flow fluidized bed reactor (28), a duct (34, 35) feeding reducing gas running both into the counterflow and the parallel-flow fluidized bed reactors.

10. Plant according to Claim 8 or 9, characterized in that the conveying duct (22) for fine-particulate iron ore opens into the reducing gas duct (4) in the starting region of the same, i.e. just after its connection to the melter gasifier (3).

11. Plant according to one or more of Claims 8 to 10, characterized in that the conveying duct (22) for fine-particulate iron ore is formed by a blow-in nozzle (38) projecting through the wall (39) of the reducing gas duct (4), said blow-in nozzle including a central tube (41) conducting fine particles and a carrier gas and, at the mouth (42) of the central tube (41), being provided with at least one nozzle (43) which is connected to a gas duct (44) for feeding a secondary gas, the longitudinal axis of the nozzle (43) enclosing an angle (α) with the longitudinal central axis (46) of the central tube (41)(Figs. 3, 4).

12. Plant according to Claim 11, characterized in that the angle (α) ranges between 20 and 60°C.

13. Plant according to Claim 11 or 12, characterized in that the longitudinal axis of the nozzle (43) is oriented in a skew manner relative to the longitudinal central axis (46) of the central tube (41) and, upon projection of the longitudinal axis of the nozzle (43) perpendicular to a plane laid through the longitudinal central axis (46) of the central tube (41) and the nozzle mouth, an angle (α) ranging between 30 and 60° is formed between the projected longitudinal axis of the nozzle and the longitudinal central axis (46) of the central tube (41).

14. Plant according to Claim 8 or 9, characterized in that the conveying duct (22) for fine-particulate iron ore runs into the reducing gas duct (4) by means of a lance (58) oriented opposite to the flow prevailing in the reducing gas duct (Fig. 2).

## Revendications

1. Procédé pour la fabrication de fonte liquide (10) ou de produits précurseurs d'acier à partir de porteurs d'oxydes de fer sous forme de fines particules et de matières ferreuses en morceaux, comme de l'éponge de fer partiellement et/ou complètement réduite, dans une zone de gazéification par fusion (9) d'un gazéificateur par fusion (3), dans lequel, par introduction de matières contenant du carbone et d'un gaz contenant de l'oxygène avec formation simultanée d'un gaz réducteur dans un lit (13) formé par des porteurs de carbone solides, la matière ferreuse est fondue, le cas échéant après une réduction complète préalable, dans lequel on introduit des porteurs d'oxydes de fer sous forme de fines particules, comme du fin minerai ou de la poussière de minerai contenant du fer et de la fine poussière d'oxydes de fer, dans un courant de gaz réducteur quittant le gazéificateur par fusion (3), on débarrasse le gaz réducteur de la matière sous forme de fines particules formée à partir de ceux-ci, on introduit la matière séparée sous forme de fines particules dans la zone de gazéification par fusion (9) par une ligne de recyclage de poussière (26, 27, 28, 29) formant un système de sas, au moyen d'un brûleur à poussière (30), et on utilise le gaz réducteur pour la réduction de matière contenant de l'oxyde de fer, caractérisé en ce que la matière séparée sous forme de fines particules est réduite dans la ligne de recyclage de poussière (26 à 29) formant un système de sas au moyen d'au moins un réacteur à lit fluidisé (27, 28), dans lequel le lit fluidisé est formé par la matière séparée sous forme de fines particules et par le gaz réducteur.

2. Procédé suivant la revendication 1, caractérisé en ce que le sas à lit fluidisé (25) présente une zone à lit fluidisé à contre-courant (32), formée par la matière séparée sous forme de fines particules, qui est traversée par du gaz réducteur à contre-courant par rapport à la matière, et une zone à lit fluidisé à courants parallèles (33), formée par la matière séparée sous forme de fines particules, qui est traversée par du gaz réducteur en courant parallèle par rapport à la matière, de préférence en quantité sensiblement plus grande que dans la zone à lit fluidisé à contre-courant (32), dans lesquelles la matière sous forme de fines particules est réduite.

3. Procédé suivant la revendication 1 ou 2, caractérisé en ce que le minerai de fer sous forme de fines particules est introduit dans le courant de gaz réducteur, peu après que celui-ci ait quitté le gazéificateur par fusion (3).

4. Procédé suivant une ou plusieurs des revendications 1 à 3, caractérisé en ce que le minerai de fer sous forme de fines particules est insufflé dans le courant de gaz réducteur, de préférence après le refroidissement de celui-ci à une température de 800 à 900°C.

5. Procédé suivant la revendication 4, caractérisé en ce qu'un jet central de matière formé du minerai de fer sous forme de fines particules et d'un gaz porteur est introduit dans le gaz réducteur et au moins un jet de gaz formé par un gaz secondaire est dirigé vers le jet de matière, le jet de gaz pulvérisant le jet de matière et les fines particules étant réparties uniformément dans le gaz réducteur (Fig. 3, 4).

6. Procédé suivant la revendication 5, caractérisé en ce que le jet de gaz imprime au jet de matière un couple de rotation autour de l'axe du jet de matière et les fines particules sortent du jet de matière à cause des forces centrifuges et ce dernier est désagrégé.

7. Procédé suivant la revendication 4, caractérisé en ce que le minerai de fer sous forme de fines particules est insufflé dans le courant de gaz réducteur en sens contraire à l'écoulement de celui-ci (Fig. 2).

8. Installation pour la mise en oeuvre du procédé suivant une ou plusieurs des revendications 1 à 7, avec un gazéificateur par fusion (3) avec une conduite d'admission (6) pour l'addition de matière contenant du carbone, une conduite de gaz réducteur (4) avec un séparateur de matières solides (5) pour l'extraction du gaz réducteur produit et une conduite (7) pour l'admission de gaz contenant de l'oxygène, ainsi qu'en outre avec un orifice de coulée (12) de laitier et de fer en fusion, dans laquelle une portion inférieure (I) du gazéificateur par fusion (3) est prévue pour recueillir la fonte en fusion (10) respectivement le produit précurseur de l'acier et le laitier liquide (11), une portion moyenne (II) située au-dessus de celle-ci pour recueillir un lit (13) de porteurs de carbone solides et enfin une portion supérieure (III) servant de chambre de calmage, et une cuve de réduction (1) pour la matière contenant des oxydes de fer, dans laquelle la cuve de réduction (1) est raccordée au gazéificateur par fusion (3) par la conduite de gaz réducteur (4) et par une conduite (15) transportant la matière au moins partiellement réduite (éponge de fer) de la cuve de réduction (1) au gazéificateur par fusion (3) et dans laquelle une conduite de transport (22) pour du minerai de fer sous forme de fines particules débouche dans la conduite de gaz réducteur (4), et avec un dispositif de recyclage de poussière (25) formant un système de sas partant du séparateur de matières solides (5) et débouchant dans le gazéificateur par fusion (3) avec un brûleur à poussière (30), caractérisée en ce que le dispositif de recyclage de poussière (25) est formé par au moins un réacteur à lit fluidisé (27, 28), dans lequel débouche une conduite d'admission (34, 35) amenant du gaz réducteur.

9. Installation suivant la revendication 8, caractérisée en ce que le dispositif de recyclage de poussière (25) est formé d'un réacteur à lit fluidisé à contre-courant (27) et d'un réacteur à lit fluidisé à courants parallèles (28) qui le suit, une conduite d'admission (34, 35) amenant du gaz réducteur débouchant aussi bien dans le réacteur à lit fluidisé à contre-courant que dans celui à courants parallèles.

10. Installation suivant la revendication 8 ou 9, caractérisée en ce que la conduite de transport (22) pour du minerai de fer sous forme de fines particules débouche dans la partie initiale de la conduite de gaz réducteur (4), c'est-à-dire peu après le raccordement de celle-ci au gazéificateur par fusion (3).

11. Installation suivant une ou plusieurs des revendications 8 à 10, caractérisée en ce que la conduite de transport (22) pour du minerai de fer sous forme de fines particules est formée par une buse de soufflage (38) passant à travers la paroi (39) de la conduite de gaz réducteur (4), qui présente un tube central (41) conduisant des fines particules et un gaz porteur et qui est pourvue, à l'embouchure (42) du tube central (41), d'au moins une buse (43) qui est raccordée à une conduite de gaz (44) pour l'admission d'un gaz secondaire, l'axe longitudinal de la buse (43) formant un angle (α) avec l'axe central longitudinal (46) du tube central (41) (Fig. 3, 4).

12. Installation suivant la revendication 11, caractérisée en ce que l'angle (α) est compris dans la gamme située entre 20 et 60°.

13. Installation suivant la revendication 11 ou 12, caractérisée en ce que l'axe longitudinal de la buse (43) est gauche par rapport à l'axe central longitudinal (46) du tube central (41), la projection de l'axe longitudinal de la buse (43) perpendiculairement sur un plan, formé par l'axe central longitudinal (46) du tube central (41) et l'embouchure de la buse, donnant naissance à un angle (α) compris entre 30 et 60° entre la projection de l'axe longitudinal de la buse et l'axe central longitudinal (46) du tube central (41).

14. Installation suivant la revendication 8 ou 9, caractérisée en ce que la conduite de transport (22) pour du minerai de fer sous forme de fines particules débouche dans la conduite de gaz réducteur (4) avec une lance (58) orientée en sens contraire de l'écoulement dans la conduite de gaz réducteur (Fig. 2).
